# EUROPÄISCHE PATENTSCHRIFT

(11) **EP 0 919 333 B1**
(45) Veröffentlichungstag und Bekanntmachung des Hinweises auf die Patenterteilung: **20.02.2002**
(21) Anmeldenummer: 97120926.7
(22) Anmeldetag: 28.11.1997
(51) Int. Cl.: B24B 41/04, B23Q 1/25

(54) **Walzenschleifmaschine**
Apparatus for grinding rollers
Appareil de meulage pour rouleaux

(43) Veröffentlichungstag der Anmeldung: 02.06.1999
(73) Patentinhaber: Waldrich Siegen Werkzeugmaschinenbau GmbH, 57299 Burbach (DE)
(72) Erfinder: Haferkorn, Wolfgang, 60322 Frankfurt/Main (DE)
(74) Vertreter: Valentin, Ekkehard, Dipl.-Ing.

(56) Entgegenhaltungen:
- EP-A- 0 459 158
- CH-A- 653 590
- FR-A- 2 370 553
- US-A- 4 238 205

## Beschreibung

Die Erfindung betrifft eine Walzenschleifmaschine zum Konturenschleifen von Walzen mit einer Vorrichtung zum Nachführen einer auf einer Schleifspindel gelagerten Schleifscheibe tangential an die Walzenkontur. Eine solche Maschine ist aus EP 459 158 A bekannt.

Solche Walzenschleifmaschinen werden zum Bearbeiten von beispielsweise in Blech-, Kunststoff- und Papierwalzwerken eingesetzten Arbeits- und Stützwalzen verwendet. Diese Walzen haben in der Regel immer eine von der reinen Zylinderform abweichende, z, B. hohle bzw. ballige oder mit einer Kombination daraus ausgebildete Kontur. Beim Schleifen dieser Konturen hat sich als nachteilig herausgestellt, daß eine Schleifscheibe wegen ihrer parallel zur Walzenmitte verlaufenden Welle bzw. Schleifspindel eine Walze fast immer mit nur einer Kante schleift und somit nicht vollflächig zum Einsatz kommt. Als Folge hiervon wird mit sehr kleinen Längsvorschüben gefahren, um eine Stufenbildung in der Walze zu vermeiden, mit der Maßgabe alledings, daß sich hierdurch die Schleifzeiten entsprechend verlängern.

Damit sich diese Nachteile vermeiden lassen, ist es seit langem bekannt, die die Schleifscheibe tragende Schleifspindel so zu schwenken und gegen die Walze anzustellen, daß die Scheibe weitestgehend immer tangential an der Kontur anliegt, wodurch mit annähernd voller Scheibenbreite gearbeitet werden kann. Damit sich dieses erreichen läßt, wird die Schleifmaschine mit der Möglichkeit für eine Schwenkbewegung des Obersupportes ausgelegt. Das erfordert aber nicht nur eine zusätzlich Trennung des Supportes, sondern es ist außerdem einerseits sehr schwierig, diese Schwenkbewegung um den festgelegten Drehpunkt absolut hysteresisfrei zu erzeugen und andererseits gleichzeitig die für den Schleifprozeß erforderliche Dämpfung in der Trennfläche zu erreichen.

Der Erfindung liegt daher die Aufgabe zugrunde, bei einer Walzenschleifmaschine der eingangs genannten Art das tangentiale Nachführen der Schleifscheibe zu verbessern, insbesondere bautechnisch zu vereinfachen und mit größerer Genauigkeit zu ermöglichen.

Diese Aufgabe wird erfindungsgemäß durch die Merkmale des Anspruchs 1 gelöst. Damit ist es auf verblüffend einfache Weise möglich, durch Verdrehen der Hülse um die Schleifspindel die Schleifscheibe mit einer reproduzierbaren Genauigkeit auf 1/100 µm anzustellen, und zwar unabhängig von einer beliebig herzustellenden Walzenkontur, so daß sich bei jeglicher Geometrie eine gewünscht tangentiale Anstellung ergibt. Mit dem Verdrehen der Hülse, die dazu an einen geeigneten Mechanismus angeschlossen ist, verlagert sich die Schleifspindel mit einer in der Ebene der Werkstückmitte und der Schleifspindelmitte liegenden Hauptbewegung und stellt sich in einen dem Verdrehmaß entsprechenden Winkel zur Werkstückmittellinie ein. Dieser Winkel läßt sich über eine an die Walzenschleifmaschine vorzugsweise angschlossene NC-Steuerung eines übergeordneten Rechners als Tangente an die Kurve berechnen.

Eine bevorzugte Ausgestaltung der Erfindung sieht vor, daß der Schnittpunkt der beiden Längsachsen in der Mitte der Schleifscheibe liegt. Aufgrund des somit erreichten ortsfesten Schnittpunktes läßt sich die Schleifspindel anstellen bzw. nachführen, ohne daß sich der Abstand zwischen den Mittenpunkten des Werkstückes bzw. der Walze und der Schleifspindel wesentlich verändert. Die Genauigkeit des tangentialen Nachführens läßt sich auf diese Weise weiter erhöhen.

Wenn vorzugsweise sowohl die Hülse als auch die Exzenterbuchse an ihren beiden Enden vorgespannt ist, wird die Präzision beim Nachführen der Schleifscheibe noch größer. Zum Vorspannen eignen sich hydrostatische Lagerungen oder vorgespannte Wälzführungen, die sich aufgrund der Drehbewegung bei der Anstellung bzw. dem Nachführen der Schleifspindel problemlos einsetzen lassen. Die erfindungsgemäß zwischen dem Verdrehwinkel der Hülse und dem Verdrehwinkel der Schleifspindel erreichte sehr große mechanische Übersetzung trägt außerdem dazu bei, daß die Zustellbewegung der Schleifscheibe beim Nachführen an die Walzenkontur durch diese Übersetzung im Verhältnis von ca. 1:100 verkleinert wird.

Eine Ausführung der Erfindung sieht vor, daß die Hülse konzentrisch auf einer die Schleifspindel aufnehmenden Exzenterbuchse angeordnet ist. Die Schleifspindel ist somit nicht mehr direkt in der schrägen Hülse angeordnet, sondern mittelbar über die innere Exzenterbuchse, so daß sich ein für Feineinstellungen bzw. -justierungen besonders geeigneter Doppelexzenter erreichen läßt.

Weitere Einzelheiten und Vorteile der Erfindung ergeben sich aus den Patentansprüchen und der nachfolgenden Beschreibung, in der Ausführungsbeispiele des Gegenstandes der Erfindung näher erläutert sind. Es zeigen:
- Fig. 1: in sehr schematischer Vorderansicht als Einzelheit einer an sich bekannten Walzenschleifmaschine deren durch eine Verschwenkbewegung des Obersupportes an die Kontur einer Walze anstellbare Schleifscheibe, wie im Stand der Technik verwirklicht;
- Fig. 2: als Einzelheit der Fig. 1 die in verschiedenen Positionen über die Länge der zu schleifenden Walze angestellte Schleifscheibe;
- Fig. 3: eine abweichend von der Fig. 2 tangential, mit annähernd voller Scheibenbreite an die Kontur einer Walze angestellte Schleifscheibe;
- Fig. 4: in stark vereinfachter Darstellung eine auf einer Exzenterbüchse gelagerte, an eine Walze angestellte Schleifscheibe, in der Vorderansicht;
- Fig. 5: einen Schnitt entlang der Linie V-V in Fig. 4;
- Fig. 6: als Einzelheit eine Prinzipsskizze der Kinematik bei der Anstellung der Schleifscheibe durch Verdrehen der Exzenterhülse gemäß den Fig. 4 und 5; und
- Fig. 7: eine der Fig. 5 entsprechende Darstellung der Lagerung der Schleifspindel, die hier in einem Doppelexzenter angeordnet ist.

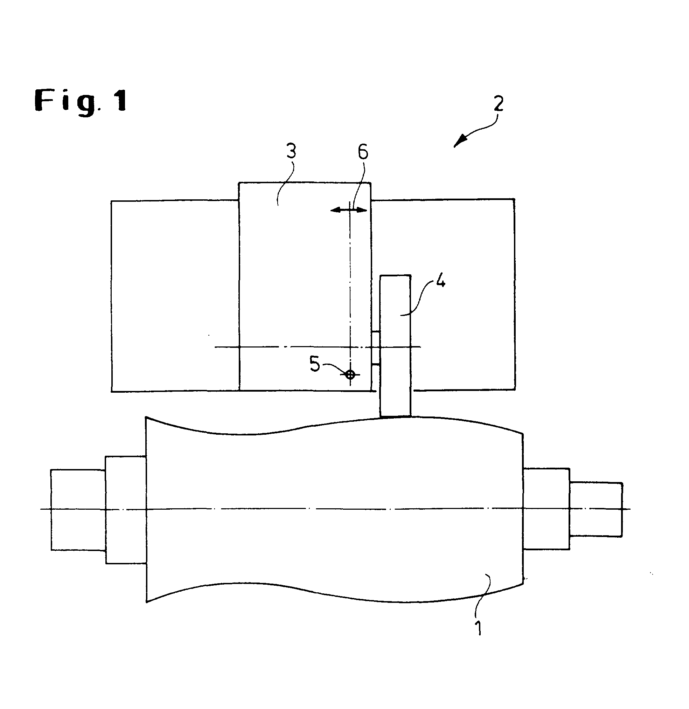

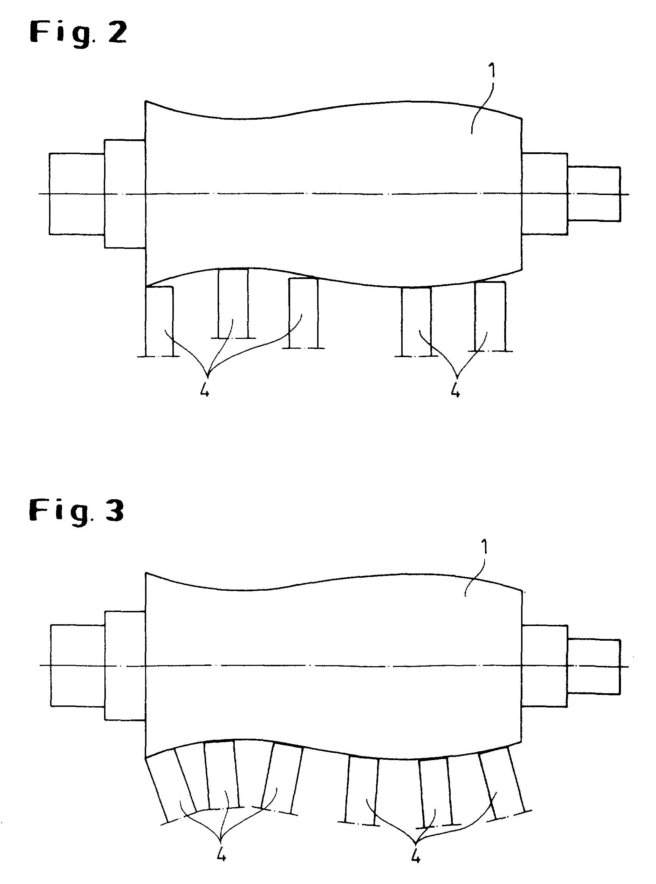

Damit sich beim Schleifen der Kontur einer Arbeits- oder Stützwalze 1 auf einer Walzenschleifmaschine 2, von der in Fig. 1 der Einfachheit halber schematisch im wesentlichen lediglich der Obersupport 3 und die Schleifscheibe 4 dargestellt sind, ein in Fig. 2 gezeigter Einsatz der in verschiedenen Arbeitspositionen über die Länge der Walze 1 gezeigten Schleifscheibe 4 mit im wesentlichen nur einer zum Einsatz kommenden Kante vermeiden und statt dessen ein gemäß Fig. 3 tangentiales Nachführen der auch hier wiederum in verschiedenen Arbeitsstellungen gezeigten Schleifscheibe 4 erreichen läßt, wird gemäß der in Fig. 1 dargestellten bekannten Ausführung der gesamte Obersupport 3 um einen Punkt 5 gemäß Doppelpfeil 6 verschwenkt. Diese Schwenkbewegung bringt die eingangs genannten Nachteile mit sich.

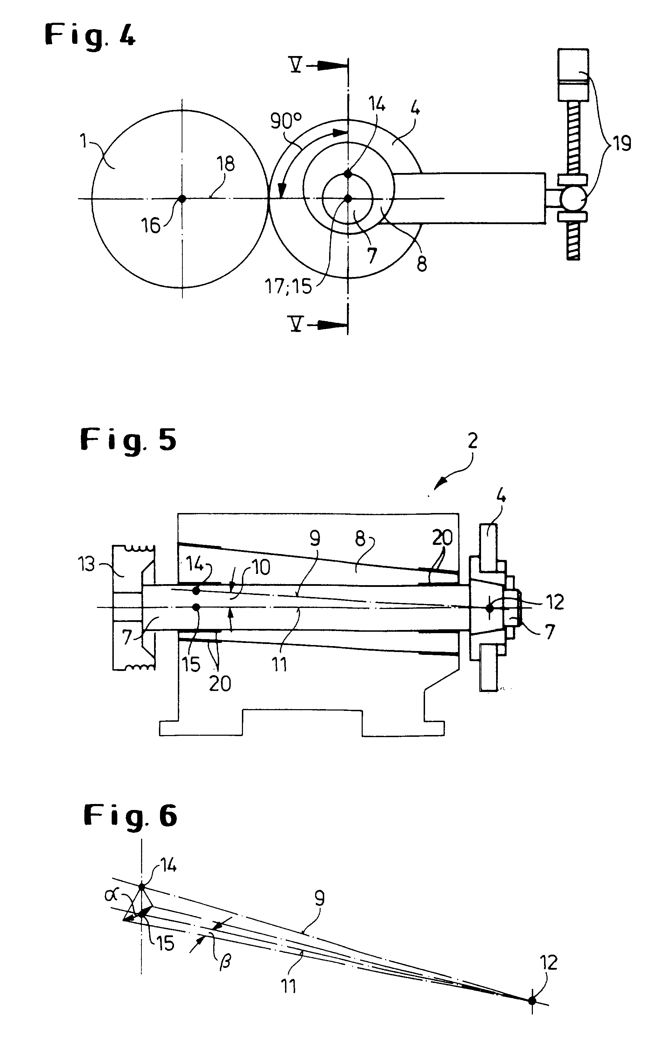

Das tangentiale Nachführen der Schleifscheibe 4 ohne die Lage des Obersupports verändern, d.h. diesen verschwenken zu müssen, wird bei der Ausführung nach den Fig. 4 bis 6 dadurch ermöglicht, daß die die Schleifscheibe 4 tragende Schleifspindel 7 in einer verdrehbaren, als Exzenterhülse ausgebildeten, um die Schleifspindel 7 verdrehbaren Hüls 8 angeordnet ist, deren Längsachse 9 unter einem Winkel 10 zur Längsachse 11 der Schleifspindel 4 geneigt ist. Im Ausführungsbeispiel liegt der Schnittpunkt 12 der beiden Längsachsen 9 bzw. 11 in der Mitte der Schleifscheibe und liegt damit örtlich fest. An dem von der Schleifscheibe 4 abgewandten Ende ist die Schleifspindel 7 über ein Antriebsmittel 13 an einen nicht gezeigten Antrieb der Walzenschleifmaschine angeschlossen.

Die Nullstellung der Schleifscheiben-Nachführung ergibt sich aus Fig. 4, in der ein jeweils auf der Hülsen-Längsachse 9 und ein auf der Schleifspindel-Längsachse 11 angenommener Punkt 14 bzw. 15 (vgl. die Fig. 5 und 6) genau 90° zu der gemäß Fig. 4 die Walzenmitte 16 mit der Schleifspindelmitte 17 - diese fällt mit dem Punkt 15 zusammen - verbindenden Linie 18 liegt. Mit dem Beginn des Verdrehens der Hülse 8 mittels eines vorzugsweise an einen übergeordneten Rechner angeschlossenen Verstellmittels (Kugelrollspindel-Antrieb) 19, wie in Fig. 4 schematisch gezeigt, führt der Punkt 15 gemäß Fig. 6 eine Hauptbewegung in der Ebene um die Schleifspindel-Längsachse 11 aus, wobei der Schnittpunkt 12 der beiden Längsachsen 9 bzw. 11 ortsfest bleibt. Die Schleifspindel 4 stellt sich damit entsprechend dem Verstellmaß in einen Winkel 10 zur Walzenmitte 16 ein, ohne den Abstand zwischen der Walzenmitte 16 und der Schleifspindelmitte 17 entscheidend zu verändern. Zwischen dem Schwenkwinkel α der Hülse 8 und dem Schwenkwinkel β der Schleifspindel 7 (vgl. die Kinematik gemäß Fig. 6) besteht eine große mechanische Übersetzung, die die Zustellbewegung im Verhältnis von ca. 1:100 verkleinert.

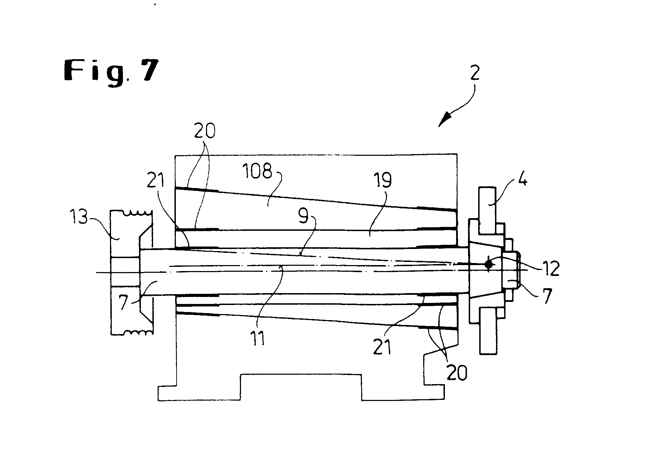

Bei der Ausführung der tangentialen Nachführung der Schleifscheibe 4 nach Fig. 7 ist die Schleifspinel 7 in einer Exzenterbuchse 19 angeordnet, die in diesem Fall von der außen angeordneten, die Neigung in Bezug zur Längsachse 11 der Schleifspindel 7 bewirkenden schrägen Hülse 108 konzentrisch umschlossen wird. Neben der vorbeschriebenen sehr genauen Nachführung der Schleifscheibe 4 an die Kontur einer Walze 1 ermöglicht hierbei der aufgrund der Ineinanderschachtelung von Exzenterbuchse 19 und schräger Hülse 108 erreichte Doppelexzenter eine Feineinstellung der Nachführbewegung der Schleifscheibe 4.

Die Anordnung mit Drehbewegungen zur Anstellung der Schleifscheibe 4 erlaubt es, die Hülse 8 bzw. die Hülse 108 und die Exzenterbuchse 19 jeweils an ihren beiden Enden mit einer hydrostatischen Lagerung 20 bzw. 21 vorzusehen und damit vorzuspannen; das hydrostatische Polster der Lagerungen 20 bzw. 21 ist in den Fig. 5 und 7 schematisch angedeutet, ohne die Zuführungen für die Druckflüssigkeit zu zeigen. Bei beiden Varianten (Fig. 5 bzw. Fig. 7) ist es möglich, die Schleifscheibe 4 mit großer Präzision tangential an die jeweilige Walzenkontur nachzuführen, wobei der Doppelexzenter gemäß Fig. 7 außerdem noch eine zusätzlich Feinjustierung ermöglicht.

## Patentansprüche

1. Walzenschleifmaschine zum Konturenschleifen von Walzen (1) mit einer Vorrichtung zum Nachführen einer auf einer Schleifspindel (7) gelagerten Schleifscheibe (4) tangential an die Walzenkontur,
**dadurch gekennzeichnet,**
**daß** die Schleifspindel (7) in einer verdrehbaren Hülse (8; 108) angeordnet ist, deren Längsachse (9) unter einem Winkel (10) zur Längsachse (11) der Schleifspindel (7) geneigt ist.

2. Walzenschleifmaschine nach Anspruch 1,
**dadurch gekennzeichnet,**
**daß** der Schnittpunkt (12) der beiden Längsachsen (9 bzw. 11) in der Mitte der Schleifscheibe (4) liegt.

3. Walzenschleifmaschine nach Anspruch 1 oder 2,
**dadurch gekennzeichnet,**
**daß** die Hülse (8; 108) als Exzenterhülse ausgebildet ist.

4. Walzenschleifmaschine nach einem der Ansprüche 1 bis 3,
**dadurch gekennzeichnet,**
**daß** die Hülse (8; 108) an ihren beiden Enden vorgespannt ist.

5. Walzenschleifmaschine nach einem der Ansprüche 1 bis 4,
**dadurch gekennzeichnet,**
**daß** die Hülse (108) konzentrisch auf einer die Schleifspindel (7) aufnehmenden Exzenterbuchse (19) angeordnet ist.

6. Walzenschleifmaschine nach Anspruch 5,
**dadurch gekennzeichnet,**
**daß** die Exzenterbuchse (19) an ihren beiden Enden vorgespannt ist.

## Claims

1. Roller grinding machine for contour grinding of rollers (1), having a device for tracking a grinding wheel (4) mounted on a grinding spindle (7) tangentially to the roller contour, **characterized in that** the grinding spindle (7) is located in a rotatable sleeve (8; 108), whose longitudinal axis (9) is inclined at an angle (10) to the longitudinal axis (11) of the grinding spindle (7).

2. Roller grinding machine according to claim 1, **characterized in that** the intersection (12) of the two longitudinal axes (9 and 11, respectively) is in the center of the grinding wheel (4).

3. Roller grinding machine according to claim 1 or 2, **characterized in that** the sleeve (8; 108) is implemented as an eccentric sleeve.

4. Roller grinding machine according to one of the claims 1 to 3, **characterized in that** the sleeve (8; 108) is prestressed at both ends.

5. Roller grinding machine according to one of the claims 1 to 4, **characterized in that** the sleeve (108) is positioned concentrically on an eccentric bushing (19) which accommodates the grinding spindle (7).

6. Roller grinding machine according to claim 5, **characterized in that** the eccentric bushing (19) is prestressed at both ends.

## Revendications

1. Machine à rectifier les cylindres pour rectifier les contours de cylindres (1) avec un dispositif pour guider tangentiellement une meule rectifieuse (4) montée sur une broche porte-meule (7), sur le contour de cylindre, **caractérisée en ce que**, la broche porte-meule (7) est disposée dans un manchon rotatif (8; 108) dont l'axe longitudinal (9) est incliné d'un angle (10) par rapport à l'axe longitudinal (11) de la broche porte-meule (7).

2. Machine à rectifier les cylindres selon la revendication 1, **caractérisée en ce que** le point d'intersection (12) des deux axes longitudinaux (9 ou 11) se trouve au milieu de la meule (4).

3. Machine à rectifier les cylindres selon la revendication 1 ou 2, **caractérisée en ce que** le manchon (8; 108) est formé en tant que manchon excentrique.

4. Machine à rectifier les cylindres selon l'une quelconque des revendications 1 à 3, **caractérisée en ce que** le manchon (8; 108) est précontraint à ses deux extrémités.

5. Machine à rectifier les cylindres selon l'une quelconque des revendications 1 à 4, **caractérisée en ce que** le manchon (108) est disposé de façon concentrique sur une douille excentrique (19) recevant la broche porte-meule (7).

6. Machine à rectifier les cylindres selon la revendication 5, **caractérisée en ce que** la douille excentrée (19) est précontrainte à ses deux extrémités.
